(19) **Europäisches Patentamt European Patent Office Office européen des brevets**

(11) **EP 1 569 944 B1**

(12) **FASCICULE DE BREVET EUROPEEN**

(45) Date de publication et mention
de la délivrance du brevet:
**01.08.2007 Bulletin 2007/31**

(51) Int Cl.:
*C07F 7/16* *(2006.01)*     *B01J 23/80* *(2006.01)*
*B01J 27/19* *(2006.01)*

(21) Numéro de dépôt: **03796182.8**

(22) Date de dépôt: **08.12.2003**

(86) Numéro de dépôt international:
**PCT/FR2003/003612**

(87) Numéro de publication internationale:
**WO 2004/063205 (29.07.2004 Gazette 2004/31)**

(54) **PROCEDE ET SYSTEME CATALYTIQUE POUR LA SYNTHESE DIRECTE D'ALKYLHALOGENOSILANES**

VERFAHREN UND KATALYSATORSYSTEM FÜR DIE DIREKTSYNTHESE VON ALKYLHALOGENSILANE

CATALYTIC SYSTEM AND METHOD FOR THE DIRECT SYNTHESIS OF ALKYLHALOGENOSILANES

(84) Etats contractants désignés:
**AT BE BG CH CY CZ DE DK EE ES FI FR GB GR HU IE IT LI LU MC NL PT RO SE SI SK TR**

(30) Priorité: **09.12.2002 FR 0215528**

(43) Date de publication de la demande:
**07.09.2005 Bulletin 2005/36**

(73) Titulaire: **Bluestar Silicones France**
**69486 Lyon (FR)**

(72) Inventeur: **COLIN, Pascale**
**F-69680 CHASSIEU (FR)**

(56) Documents cités:
**EP-A- 0 138 678         WO-A-01/30786**
**US-A- 5 117 030         US-B1- 6 211 394**

## Description

La présente invention concerne un procédé et un système catalytique pour la synthèse directe d'alkylhalogénosilanes.

Le procédé industriel de fabrication d'alkylhalogénosilanes et, par exemple, de diméthyldichlorosilane dénommé par la suite DMDCS est un procédé bien connu qui est décrit notamment dans le brevet des Etats-Unis d'Amérique US-A-2 380 995, ainsi que dans l'ouvrage de Walter NOLL, Chemistry and Technology of Silicones, 1968, édition Académie Press Inc., LONDON, pages 26-41.

Selon ce procédé dit de "synthèse directe" ou "synthèse de Rochow", on fabrique directement les alkylhalogénosilanes, par exemple le DMDCS, par réaction du chlorure de méthyle sur une masse de contact solide formée de silicium et d'un catalyseur comprenant du cuivre, suivant la reaction :

$$2CH_3Cl + Si \rightarrow (CH_3)_2SiCl_2.$$

En réalité il se forme au cours de la synthèse directe d'autres co-produits tels que ceux mentionnés ci-après : d'autres alkylhalogénosilanes comme le méthyltrichlorosilane $CH_3SiCl_3$ dénommé par la suite MTCS et le triméthylchlorosilane $(CH_3)_3SiCl$ dénommé par la suite TMCS; des alkylhydrogénosilanes halogénés comme par exemple le méthylhydrogénodichlorosilane $(CH_3)HSiCl_2$ dénommé par la suite MHDCS ; et des produits lourds qui sont des polysilanes, et en particulier des disilanes comme par exemple le triméthyltrichlorodisilane $(CH_3)Si_2Cl_3$ et le diméthyltétrachlorodisilane $(CH_3)_2Si_2Cl_4$.

Parmi tous les produits obtenus par synthèse directe, le dialkyldihalogénosilane et, par exemple le DMDCS, est le principal produit, c'est à dire le produit obtenu en quantité majoritaire. Ce produit est très recherché car, après hydrolyse et polymérisation, il permet d'obtenir des huiles et des gommes qui sont des produits de base pour la fabrication des silicones.

Il est connu d'utiliser le cuivre, pris sous forme de cuivre métallique ou sous forme de composés chimiques à base de cuivre, comme catalyseur de la réaction de synthèse directe.

De façon, notamment, à :

- améliorer l'activité moyenne (dénommée également productivité) de la masse de contact comprenant l'ensemble à base de silicium et de catalyseur, cette activité (ou productivité) étant évaluée en poids des silanes obtenus par heure et par kilogramme de silicium initialement engagé,
- améliorer également la sélectivité en dialkyldihalogénosilane et, par exemple en DMDCS, évaluée par exemple par le % molaire moyen de DMDCS par rapport à la totalité des silanes obtenus et par le rapport pondéral moyen MTCS/ DMDCS, et
- abaisser la teneur pondérale en produits « lourds » par rapport aux silanes obtenus, on a déjà proposé de rajouter au cuivre un ensemble promoteur comportant un ou plusieurs additif(s) promoteur(s). Ces additifs peuvent être : le zinc ou un halogénure de zinc (brevet US-A-2 464 033), l'aluminium (brevets US-A-2 403 370 et 2 427 605), l'étain, le manganèse, le nickel et l'argent (brevet britannique GB-A-1 207 466), le cobalt (brevet britannique GB-A-907 161), le chlorure de potassium (brevet soviétique SU-A-307 650), l'arsenic ou un composé de l'arsenic (brevet US-A-4 762 940).

Dans les brevets européens EP-A-0 138 678 et EP-A-0 138 679, on décrit l'utilisation d'un catalyseur au cuivre en mélange avec un ensemble promoteur amélioré qui renferme :

- 30 à 1 000 ppm (calculés en poids de métal par rapport à la masse de silicium engagée) d'au moins un métal choisi parmi l'étain et l'antimoine ou d'un composé à base d'étain et/ou d'antimoine,
- éventuellement 0,1 à 3 % (calculés comme indiqué ci-avant) de zinc métallique ou d'un composé à base de zinc, et
- dans le cas de EP-A-0 138 678 : 0,05 à 4 % (calculés comme indiqué ci-avant) de césium ou d'un composé du césium, pris seul ou en mélange avec au moins un autre alcalin choisi parmi le lithium, le sodium, le potassium, le rubidium et un composé à base dudit métal alcalin ; ou dans le cas de EP-A-0 138 679: 0,05 à 2 % (calculés comme indiqué ci-avant) d'au moins un alcalin choisi parmi le lithium, le sodium, le potassium, le rubidium et un composé à base dudit même métal alcalin.

Dans le brevet américain US-A-4 601 101, on décrit l'utilisation d'un catalyseur au cuivre en mélange avec un autre ensemble promoteur amélioré qui renferme :

- 5 à 200 ppm (calculés en poids de métal par rapport à la masse de silicium engagée) d'étain ou d'un composé à base d'étain,

- éventuellement 100 à 10 000 ppm (calculés comme indiqué ci-avant) de zinc métallique ou d'un composé à base de zinc, et
- 25 à 931 ppm (calculés comme indiqué ci-avant) de phosphore élémentaire, d'un phosphure métallique et/ou d'un composé apte à fournir un phosphure métallique dans la masse réactionnelle de la synthèse directe.

Cependant, malgré tout l'intérêt des systèmes catalytiques (catalyseur au cuivre en mélange avec un ensemble promoteur) proposés dans l'art antérieur précité, les recherches continuent dans ce domaine pour obtenir des performances supérieures à celles obtenues avec les meilleurs systèmes catalytiques antérieurement connus, en particulier les systèmes : Cu + éventuellement Zn + Sn + Cs et Cu + éventuellement Zn+Sn+P.

Un objectif essentiel de la présente invention est de proposer un procédé et un nouveau système catalytique pour la mise en oeuvre du procédé de synthèse directe qui est différent des meilleurs systèmes catalytiques rappelés ci-dessus, notamment en ce que l'ensemble promoteur ne comporte pas de zinc ou de composé à base de zinc, et qui permet d'obtenir, notamment, une activité moyenne, une sélectivité en dialkyldihalogénosilane et une teneur pondérale en sous-produits lourds qui présentent des valeurs plus avantageuses que celle enregistrées avec les meilleurs systèmes catalytiques antérieurement connus comportant ou non du zinc dans l'ensemble promoteur.

Cet objectif est atteint par la présente invention. Plus précisément, la présente invention concerne un procédé de préparation d'alkylhalogénosilanes par réaction d'un halogénure d'alkyle, de préférence $CH_3Cl$, avec une masse solide, dite masse de contact, formée de silicium et d'un système catalytique comportant ($\alpha$) du cuivre métallique ou un composé à base de cuivre, et ($\beta$) un ensemble promoteur comprenant 10 à 500 ppm (calculés en poids de métal par rapport à la masse de silicium engagée) d'un additif $\beta$1 choisi parmi l'étain, un composé à base d'étain et un mélange de ces espèces,
ledit procédé étant caractérisé en ce que l'ensemble promoteur ($\beta$) contient en outre :

- 0,01 à 2 % (calculés en poids de métal par rapport à la masse de silicium engagée) d'un additif $\beta$2 choisi parmi le césium, le potassium et le rubidium, un composé à base dudit métal alcalin et un mélange de ces espèces, et
- 50 à 3000 ppm (calculés en poids de phosphore élémentaire par rapport à la masse de silicium engagée) d'un additif $\beta$3 choisi parmi l'élément phosphore, un composé à base de phosphore et un mélange de ces espèces.

Le catalyseur ($\alpha$) peut être utilisé à une teneur pondérale allant de 1 à 20 %, de préférence allant de 2 à 12 % par rapport à la masse de silicium engagée.

On peut utiliser, à la place du cuivre métallique, à titre de composé du cuivre, notamment : un halogénure de cuivre comme par exemple le chlorure cuivreux ou le chlorure cuivrique ; un carboxylate de cuivre comme par exemple le formiate cuivreux, le formiate cuivrique, l'acétate cuivreux ou l'acétate cuivrique ; un oxyde de cuivre comme par exemple $Cu_2O$ ou $CuO$.

On a mis en évidence, conformément à la présente invention, que l'on obtient de meilleurs résultats, notamment en sélectivité et en taux de transformation du silicium, si on introduit le cuivre sous forme de cuivre métallique et/ou sous forme de chlorure cuivreux.

La teneur pondérale en étain et/ou en composé de l'étain (additif promoteur $\beta$1 dont la teneur est calculée en poids d'étain métal) se situe dans l'intervalle allant de 10 à 500 ppm et, de préférence, allant de 30 à 300 ppm par rapport à la masse de silicium engagée.

Il est nécessaire d'avoir au moins 10 ppm d'étain métal. On a en effet constaté conformément à l'invention que les effets bénéfiques des additifs promoteurs $\beta$2 à base d'un métal alcalin et/ou d'un composé d'un métal alcalin et $\beta$3 à base de phosphore, ne sont obtenus qu'en présence d'étain et/ou d'un composé de l'étain. En outre une teneur pondérale supérieure à 500 ppm aurait un effet néfaste sur la réaction et notamment sur la sélectivité

Comme composé à base d'étain, on utilise par exemple le chlorure d'étain. L'additif promoteur $\beta$1 qui est utilisé de préférence est l'étain métal ; avantageusement cet étain métallique peut être ajouté sous forme de bronze.

La teneur pondérale en métal alcalin et/ou en composé de métal alcalin (additif promoteur $\beta$2 dont la teneur est calculée en alcalin métal) se situe dans l'intervalle allant de 0,01 à 2 % en poids et, de préférence, allant de 0,05 à 1,0 % en poids. Au dessous de 0,01 % en poids l'action du métal alcalin n'est pas vraiment décelable et au-dessus de 2 % en poids, le métal alcalin n'a pas l'effet attendu sur la sélectivité.

Comme composé de métal alcalin choisi parmi le Cs, le K et le Rb, on peut utiliser :

les halogénures et par exemple le chlorure ; les carboxylates et par exemple le formiate ou l'acétate. Le chlorure de césium, le chlorure de potassium, le chlorure de rubidium et/ou un mélanges de ces composés sont les additifs promoteurs $\beta$2 qui sont utilisés de préférence.

La teneur pondérale en phosphore élémentaire et/ou en composé à base de phosphore (additif promoteur $\beta$3 dont la teneur est calculée en poids de phosphore élémentaire) se situe dans l'intervalle allant de 50 à 3000 ppm et, de préférence, allant de 80 à 1500 ppm et, plus préférentiellement encore, allant de 90 à 800 ppm. Au dessous de 50 ppm l'action du phosphore n'est pas vraiment décelable et au-dessus de 3000 ppm, le phosphore a un effet poison qui abaisse la séléctivité.

Le phosphore qui est utilisé dans la présente invention comme additif promoteur peut être du phosphore élémentaire, tel que par exemple le phosphore rouge, le phosphore blanc et le phosphore noir. Comme composé à base de phosphore, on peut utiliser : les phosphures métalliques et par exemple le phosphure d'aluminium, le phosphure de calcium $Ca_3P_2$, le phosphure de cuivre $Cu_3P$, le phosphure de nickel $NiP_2$, le phosphure de d'étain $SnP$, les phosphures de fer $FeP$, $Fe_2P$ et $Fe_3P$, les phosphures de zinc $Zn_3P_2$ et $ZnP_2$, le phosphure de silicium ; les composés à base de phosphore aptes à former des phosphures métalliques, du type de ceux précités, lors de la réaction de synthèse directe entre l'halogénure d'alkyle et la masse de contact à base de silicium et du système catalytique ($\alpha$) + ($\beta$). Comme autre composé à base de phosphore, on peut utiliser encore certains alliages qui sont connus pour contenir à la fois du phosphore et une partie métallique et sont aisément disponibles dans le commerce et par exemple les alliages cuivre-phosphore qui contiennent environ de 7 à 15 % en poids de phosphore. Le phosphure de cuivre $Cu_3P$ et les alliages cuivre-phosphore sont les additifs promoteurs $\beta3$ qui sont utilisés de préférence.

De manière plus préférentielle, les quantités des additifs $\beta2$ et $\beta3$ sont choisies à l'intérieur des zones de variation générale et préférée précitées de manière à ce que le rapport :

$$\frac{\text{nombre d'atome-grammes d'alcalin métal}}{\text{nombre d'atome-grammes de phosphore élémentaire}}$$

varie de 1 à 20, de préférence de 1,2 à 15 et, plus préférentiellement encore, de 1,5 à 12.

Pour le reste, il est souhaitable que la dimension particulaire du silicium soit telle que le diamètre moyen d'au moins 50 % en poids des particules soit compris entre 10 et 500 $\mu$m et, de préférence, entre 60 et 200 $\mu$m. De même le catalyseur ($\alpha$) et le groupe de promoteurs ($\beta$) se trouvent également sous forme de particules dont le diamètre moyen d'au moins 50 % en poids des particules est avantageusement compris entre 1 et 100 $\mu$m.

Le procédé de synthèse directe selon l'invention peut être mis en oeuvre de façon générale dans un des trois types d'appareillages suivants : un réacteur du type à lit agité comme celui décrit dans le brevet des Etats-Unis d'Amérique US-A-2 449 821, un réacteur du type à lit fluidisé comme celui décrit dans le brevet des Etats-Unis d'Amérique US-A-2 389 931 ou dans un four rotatif.

Les ingrédients constitutifs du système catalytique ($\alpha$) + ($\beta$) peuvent être également utilisés déposés sur une matière minérale en particules comme le sable, la silice broyée, le gel de silice, l'alumine, la brique réfractaire broyée, les catalyseurs pour le craquage du pétrole, des zéolites et des argiles calcinées comme décrit dans le brevet français FR-A-1 545 407.

La réaction de synthèse directe a lieu à une température se situant dans l'intervalle allant de 280 à 400°C et, de préférence, allant de 300 à 380 °C. Elle peut être conduite, en tout ou partie, sous une pression absolue d'halogénure d'alkyle égale à la pression atmosphérique (1 bar) ou supérieure à la pression atmosphérique ; quand on se situe dans ce dernier cas, on travaille généralement sous une pression absolue allant de 1,1 à 8 bars et, de préférence, allant de 1,5 à 4 bars.

Pour la conduite de la réaction de synthèse directe, on réalise avantageusement au préalable, comme cela est bien connu, une étape initiale d'activation de la masse de contact (formée par l'ensemble à base de silicium + catalyseur + promoteurs) ; un des moyens d'activation qui convient bien peut consister à porter ladite masse de contact à une certaine température qui peut être inférieure ou supérieure de quelques degrés à quelques dizaines de degrés à la température choisie pour la réaction de synthèse directe et située dans l'intervalle général ou préférentiel mentionné supra.

En utilisant le système catalytique ($\alpha$) + ($\beta$) selon l'invention, on peut obtenir, lorsque la réaction est mise en oeuvre, en lit agité comme en lit fluidisé, à une température allant de 280°C à 400°C et, de préférence, allant de 300 à 380 °C, une activité moyenne et une sélectivité en dialkyldihalogénosilane élevées ainsi qu'une teneur pondérale en sous-produits lourds faible.

S'agissant de l'activité moyenne du système catalytique, elle est par exemple de l'ordre ou supérieure à 330 g de silanes/h/kg Si, pouvant atteindre 370 g de silanes/h/kg Si et plus.

S'agissant de la sélectivité, évaluée par exemple par le % molaire moyen de DMDCS par rapport à la totalité des silanes obtenus et par le rapport pondéral moyen MTCS/DMDCS :

- % molaire moyen de DMDCS : la valeur obtenue est de l'ordre ou supérieur à 90 %, pouvant atteindre 93 % et plus,
- rapport pondéral moyen MTCS/DMDCS : la valeur obtenue est de l'ordre ou inférieur à 0,05, pouvant atteindre 0,035.

S'agissant du pourcentage de lourds formés par rapport aux silanes obtenus, il peut être aussi faible que 1,2 % en poids, et il est généralement inférieur à 2,3 % en poids.

Les niveaux de valeur obtenus en matières, notamment, d'activité moyenne, de sélectivité en dialkyldihalogénosilane et de teneur pondérale en sous-produits lourds, dans les proportions telles que celles mentionnées ci-avant, apparaissent comme particulièrement surprenantes vis-à-vis des enseignements de l'art antérieur qui sont restés complètement muets jusqu'à ce jour sur la valeur des niveaux qu'il est possible d'obtenir en utilisant les systèmes catalytiques des procédé de synthèse directe conforme à cet art antérieur ne comportant pas de promoteur à base de zinc.

D'autres avantages et caractéristiques de la présente invention apparaîtront à la lecture des exemples suivants donnés à titre illustratif mais nullement limitatif.

Dans les exemples suivants, sauf mention contraire, on utilise un réacteur pilote cylindrique de diamètre intérieur 60 mm et de hauteur ÷ 250 mm, muni à sa base d'un distributeur de gaz en verre fritté. Le silicium et le système catalytique sont chargés sous forme d'une poudre dont la taille moyenne d'au moins 50 % en poids des particules est comprise entre 60 et 200 $\mu$m.

La réaction s'effectue en lit agité et le réacteur est muni d'un élément chauffant extérieur.

EXEMPLES :

EXEMPLE 1

Système catalytique : Cu/Sn/Cs/P (1029 ppm)

Dans un réacteur vertical, cylindrique, en verre, muni d'un agitateur métallique et d'un distributeur de gaz en verre fritté, on charge une poudre constituée de : 210 g de silicium, 16,4 g de CuCl et 0,38 g de bronze contenant 10 % en poids d'étain et 1,9 g de CsCl. Après amorçage de la réaction et quand les performances se sont stabilisées (soit après 4heures de réaction), on ajoute 3 g de $Cu_3P$ contenant 7,2 % en poids de phosphore.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h. La réaction est arrêtée par l'opérateur après 4 heures de maintien à 360°C pour permettre l'ajout de $Cu_3P$ quand le réacteur a atteint la température ambiante. Une fois l'ajout effectué, le contrôle de la montée en température et l'introduction de $CH_3Cl$ sont réalisées comme précédemment.

L'essai se déroule à pression atmosphérique. L'essai est arrêté par l'opérateur après 8 heures de production de méthylchlorosilanes (MCS).

Cet essai a produit des silanes avec une productivité ou activité moyenne de 335 g de silanes par heure et par kg de Si chargé initialement dans le réacteur.

Le mélange produit est analysé par chromatographie en phase vapeur, et il est caractérisé par un % molaire moyen de DMDCS de 93,3 %.

Le ratio MTCS/DMDCS obtenu est égal à 0.037 (% pondéral/ % pondéral).

La proportion de "lourds" (polysilanes) obtenue s'élève à 1,7 % en poids.

EXEMPLE 2

Système catalytique : Cu/Sn/Cs/P (103 ppm)

Dans un réacteur vertical, cylindrique, en verre, muni d'un agitateur métallique et d'un distributeur de gaz en verre fritté, on charge une poudre constituée de : 210 g de silicium, 16,4 g de CuCl, 0,38 g de bronze contenant 10 % en poids d'étain et 1,9 g de CsCl. Après amorçage de la réaction et quand les performances se sont stabilisées (soit après 3 heures 30 minutes de réaction), on ajoute 0,275 g de $Cu_3P$ contenant 7,2 % en poids de phosphore.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h. La réaction est arrêtée par l'opérateur après 3 heures 30 minutes de maintien à 360°C pour permettre l'ajout de $Cu_3P$ quand le réacteur a atteint la température ambiante. Une fois l'ajout effectué le contrôle de la montée en température et l'introduction de $CH_3Cl$ sont réalisées comme précédemment. La pression de l'essai est régulée à 3.5 bar absolu. L'essai est arrêté par l'opérateur après 8 heures de production de MCS

Cet essai a produit des silanes avec une productivité ou activité moyenne de 380 g de silanes par heure et par kg de Si chargé initialement dans le réacteur.

Le mélange produit est analysé par chromatographie en phase vapeur, et il est caractérisé par un % molaire moyen de DMDCS de 94.1 %.

Le ratio MTCS/DMDCS obtenu est égal à 0.035 (% pondéral / % pondéral).

La proportion de "lourds" (polysilanes) obtenue s'élève à 1.2 % en poids.

ESSAIS COMPARATIFS :

ESSAI A

Système catalytique : Cu/Zn/Sn

Dans un réacteur vertical, cylindrique, en verre, muni d'un agitateur métallique et d'un distributeur de gaz en verre fritté, on charge une poudre constituée de : 210 g de silicium, 16,4 g de CuCl, 1,64 g de $ZnCl_2$ et 0,38 g de bronze contenant 10 % en poids d'étain.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré. à 20°C, de 60 g/h.

La température du réacteurest régulée: à 360°C et le débit-de chlorure de méthyle est maintenu à 60 g/h pendant 8 heures, l'essai se déroule à pression atmosphérique.

Cet essai a produit des silanes avec une productivité ou activité moyenne de 326 g de silanes par heure et par kg de Si chargé initialement dans le réacteur.

Le mélange produit est analysé par chromatographie en phase vapeur, et il est caractérisé par un % molaire moyen de DMDCS de 86,8 %.

Le ratio MTCS/DMDCS obtenu est égal à 0.074 (% pondéral/ % pondéral).

La proportion de "lourds" (polysilanes) obtenue s'élève à 3,7 % en poids.

ESSAI B

Système catalytique : Cu/Sn/Cs/

Dans un réacteur vertical, cylindrique, en verre, muni d'un agitateur métallique et d'un distributeur de gaz en verre fritté, on charge une poudre constituée de : 210 g de silicium, 16,4 g de CuCl, 0,38 g de bronze contenant 10 % en poids d'étain et 1,9 g de CsCl.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h pendant 8 heures, l'essais se déroule à pression atmosphérique.

Cet essai a produit des silanes avec une productivité ou activité moyenne de 302 g de silanes par heure et par kg de Si chargé initialement dans le réacteur.

Le mélange produit est analysé par chromatographie en phase vapeur, et il est caractérisé par un % molaire moyen de DMDCS de 92,4 %.

Le ratio MTCS/DMDCS obtenu est égal à 0.040 (% pondéral / % pondéral).

La proportion de "lourds" (polysilanes) obtenue s'élève à 2,3 % en poids.

**Revendications**

1. Procédé de préparation d'alkylhalogénosilanes par réaction d'un halogénure d'alkyle avec une masse solide, dite masse de contact, formée de silicium et d'un système catalytique comportant (α) du cuivre métallique ou un composé à base de cuivre, et (β) un ensemble promoteur comprenant 10 à 500 ppm (calculés en poids de métal par rapport à la masse de silicium engagée) d'un additif β1 choisi parmi l'étain, un composé à base d'étain et un mélange de ces espèces,

   ledit procédé étant **caractérisé en ce que** l'ensemble promoteur (β) contient en outre :

   - 0,01 à 2 % (calculés en poids de métal par rapport à la masse de silicium engagée) d'un additif β2 choisi parmi le césium, le potassium et le rubidium, un composé à base dudit métal alcalin et un mélange de ces espèces, et
   - 50 à 3000 ppm (calculés en poids de phosphore élémentaire par rapport à la masse de silicium engagée) d'un additif β3 choisi parmi l'élément phosphore, un composé à base de phosphore et un mélange de ces espèces.

**2.** Procédé selon la revendication 1, **caractérisé en ce que** la teneur en additif β1 est située dans l'intervalle allant de 30 à 300 ppm.

**3.** Procédé selon la revendication 1 ou 2, **caractérisé en ce que** l'additif β1 est l'étain métal.

**4.** Procédé selon la revendication 3, **caractérisé en ce que** l'étain métallique est engagé sous forme de bronze.

**5.** Procédé selon l'une quelconque des revendications 1 à 4, **caractérisé en ce que** la teneur en additif β2 est située dans l'intervalle allant de 0,05 à 1,0 %.

**6.** Procédé selon l'une quelconque des revendications 1 à 5, **caractérisé en ce que** l'additif β2 est le chlorure de césium, le chlorure de potassium, le chlorure de rubidium et/ou un mélange de ces composés.

**7.** Procédé selon l'une quelconque des revendications 1 à 6, **caractérisé en ce que** la teneur en additif β3 est située dans l'intervalle allant de 80 à 1500 ppm.

**8.** Procédé selon l'une quelconque des revendications 1 à 7, **caractérisé en ce que** l'additif β3 est le phosphure de cuivre $Cu_3P$ et/ou un alliage cuivre-phosphore.

**9.** Procédé selon l'une quelconque des revendications 1 à 8, **caractérisé en ce que** les quantités des additifs β2 et β3 sont choisies à l'intérieur des zones de variation générale et préférée précitées de manière à ce que le rapport :

$$\frac{\text{nombre d'atome-grammes d'alcalin métal}}{\text{nombre d'atome-grammes de phosphore élémentaire}}$$

varie de 1 à 20.

**10.** Procédé selon l'une quelconque des revendications 1 à 9, **caractérisé en ce que** la partie (α) du système catalytique est utilisée à une teneur pondérale de 1 à 20 % par rapport au poids total de silicium engagé.

**11.** Procédé selon l'une quelconque des revendications 1 à 10, **caractérisé en ce que** la partie (α) du système catalytique est choisie parmi le cuivre métallique, le chlorure cuivreux et un mélange de ces composés.

**12.** Procédé selon l'une quelconque des revendications 1 à 11, **caractérisé en ce que** la réaction de synthèse directe est conduite à une température se situant dans l'intervalle allant de 280°C à 400°C.

**13.** Système catalytique pour la mise en oeuvre d'un procédé de préparation d'alkylhalogénosilanes par réaction d'un halogénure d'alkyle avec une masse de contact comprenant du silicium, ledit sytème comportant (α) du cuivre métallique ou un composé à base de cuivre et (β) un ensemble promoteur, et étant tel que défini dans l'une quelconque des revendications 1 à 11 précédentes.

**Claims**

**1.** Process for the preparation of alkylhalosilanes by reaction of an alkyl halide with a solid body, referred to as contact body, formed of silicon and of a catalytic system comprising (α) copper metal or a copper-based compound and (β) a promoter combination comprising 10 to 500 ppm (calculated as weight of metal with respect to the weight of silicon involved) of an additive 1 chosen from tin, a tin-based compound and a mixture of these entities, the said process being **characterized in that** the promoter combination (β) additionally comprises:

- 0.01 to 2% (calculated as weight of metal with respect to the weight of silicon involved) of an additive β2 chosen from caesium, potassium and rubidium, a compound based on the said alkali metal and a mixture of these entities, and

- 50 to 3000 ppm (calculated as weight of elemental phosphorus with respect to the weight of silicon involved) of an additive β3 chosen from the element phosphorus, a phosphorus-based compound and a mixture of these entities.

**2.** Process according to Claim 1, **characterized in that** the content of additive β1 lies within the range from 30 to 300 ppm.

**3.** Process according to Claim 1 or 2, **characterized in that** the additive β1 is tin metal.

**4.** Process according to Claim 3, **characterized in that** the tin metal is charged in the form of bronze.

**5.** Process according to any one of Claims 1 to 4, **characterized in that** the content of additive β2 lies within the range from 0.05 to 1.0%.

**6.** Process according to any one of Claims 1 to 5, **characterized in that** the additive β2 is caesium chloride, potassium chloride, rubidium chloride and/or a mixture of these compounds.

**7.** Process according to any one of Claims 1 to 6, **characterized in that** the content of additive β3 lies within the range from 80 to 1500 ppm.

**8.** Process according to any one of Claims 1 to 7, **characterized in that** the additive β3 is copper phosphide $Cu_3P$ and/or a copper-phosphorus alloy.

**9.** Process according to any one of Claims 1 to 8, **characterized in that** the amounts of the additives β2 and β3 are chosen within the abovementioned regions of general and preferred variation so that the ratio:

$$\frac{\text{number of gram atoms of alkali metal}}{\text{number of gram atoms of elemental phosphorus}}$$

varies from 1 to 20.

**10.** Process according to any one of Claims 1 to 9, **characterized in that** the part (α) of the catalytic system is used at a content by weight of 1 to 20%, with respect to the total weight of silicon involved.

**11.** Process according to any one of Claims 1 to 10, **characterized in that** the part (α) of the catalytic system is chosen from copper metal, cuprous chloride and a mixture of these compounds.

**12.** Process according to any one of Claims 1 to 11, **characterized in that** the direct synthesis reaction is carried out at a temperature lying within the range from 280°C to 400°C.

**13.** Catalytic system for the implementation of a process for the preparation of alkylhalosilanes by reaction of an alkyl halide with a contact body comprising silicon, the said system comprising (α) copper metal or a copper-based compound and (β) a promoter combination and being as defined in any one of the preceding Claims 1 to 11.

**Patentansprüche**

**1.** Verfahren zur Herstellung von Alkylhalogensilanen durch Umsetzung eines Alkylhalogenids mit einer festen Masse, die Kontaktmasse genannt wird, gebildet aus Silicium und einem katalytischen System, umfassend (α) metallisches Kupfer oder eine Verbindung auf der Grundlage von Kupfer, und (β) eine Promotor-Einheit, umfassend 10 bis 500 ppm (berechnet als Gewicht von Metall bezüglich der Masse von beteiligtem Siliciums) eines Additvs β1, ausgewählt aus Zinn, einer Verbindung auf der Grundlage von Zinn und aus einem Gemisch dieser Spezies, wobei das Verfahren **dadurch gekennzeichnet ist, dass** die Promotor-Einheit (β) weiterhin enthält:

- 0,01 bis 2 % (berechnet als Gewicht von Metall bezüglich der Masse von beteiligtem Silicium) eines Additvs

β2, ausgewählt aus Cäsium, Kalium und Rubidium, einer Verbindung auf der Grundlage des Alkalimetalls und aus einem Gemisch dieser Spezies, und
- 50 bis 3.000 ppm (berechnet als Gewicht von elementarem Phosphor bezüglich der Masse von beteiligtem Silicium) eines Additivs β3, ausgewählt aus elementarem Phosphor, einer Verbindung auf der Basis von Phosphor und aus einem Gemisch dieser Spezies.

2. Verfahren nach Anspruch 1, **dadurch gekennzeichnet, dass** der Gehalt an Additiv β1 im Bereich von 30 bis 300 ppm liegt.

3. Verfahren nach Anspruch 1 oder 2, **dadurch gekennzeichnet, dass** das Additiv β1 metallisches Zinn ist.

4. Verfahren nach Anspruch 3, **dadurch gekennzeichnet, dass** das metallische Zinn in Form von Bronze beteiligt ist.

5. Verfahren nach einem der Ansprüche 1 bis 4, **dadurch gekennzeichnet, dass** der Gehalt an Additiv β2 im Bereich von 0,05 bis 1,0 % liegt.

6. Verfahren nach einem der Ansprüche 1 bis 5, **dadurch gekennzeichnet, dass** das Additiv β2 Cäsiumchlorid, Kaliumchlorid, Rubidiumchlorid und/oder ein Gemisch dieser Verbindungen ist.

7. Verfahren nach einem der Ansprüche 1 bis 6, **dadurch gekennzeichnet, dass** der Gehalt an Additiv β3 im Bereich von 80 bis 1.500 ppm liegt.

8. Verfahren nach einem der Ansprüche 1 bis 7, **dadurch gekennzeichnet, dass** das Additiv β3 Kupferphosphid $Cu_3P$ und/oder eine Kupfer-Phosphor-Legierung ist.

9. Verfahren nach einem der Ansprüche 1 bis 8, **dadurch gekennzeichnet, dass** die Mengen der Additive β2 und β3 innerhalb der allgemeinen und vorgenannten bevorzugten Variationszonen so gewählt sind, dass das Verhältnis:

$$\frac{\text{Anzahl von Grammatomen Alkalimetall}}{\text{Anzahl von Grammatomen elementarem Phosphor}}.$$

von 1 bis 20 variiert.

10. Verfahren nach einem der Ansprüche 1 bis 9, **dadurch gekennzeichnet, dass** der Teil (α) des katalytischen Systems in einem Gehalt von 1 bis 20 Gew.-% bezüglich des Gesamtgewichts von beteiligtem Silicium verwendet wird.

11. Verfahren nach einem der Ansprüche 1 bis 10, **dadurch gekennzeichnet, dass** der Teil (α) des katalytischen Systems aus metallischem Kupfer, Kupfer(I)-chlorid und aus einem Gemisch dieser Verbindungen ausgewählt wird.

12. Verfahren nach einem der Ansprüche 1 bis 11, **dadurch gekennzeichnet, dass** die direkte Reaktionssynthese bei einer Temperatur durchgeführt wird, die im Bereich von 280 bis 400 °C liegt.

13. Katalytisches System zur Durchführung eines Verfahrens zur Herstellung von Alkylhalogensilanen durch Umsetzung eines Alkylhalogenids mit einer Kontaktmasse, die Silicium einschließt, wobei das System (α) metallisches Kupfer und/oder eine Verbindung auf der Grundlage von Kupfer und (β) eine Promotor-Einheit umfasst und so ist, wie in einem der vorgenannten Ansprüche 1 bis 11 definiert.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2380995 A
- US 2464033 A
- US 2403370 A
- US 2427605 A
- GB 1207466 A
- GB 907161 A
- SU 307650 A
- US 4762940 A
- EP 0138678 A
- EP 0138679 A
- US 4601101 A
- US 2449821 A
- US 2389931 A
- FR 1545407 A

**Littérature non-brevet citée dans la description**

- **WALTER NOLL.** Chemistry and Technology of Silicones. Académie Press Inc, 1968, 26-41